# EUROPÄISCHE PATENTSCHRIFT

(11) **EP 3 295 785 B1**
(45) Veröffentlichungstag und Bekanntmachung des Hinweises auf die Patenterteilung: **06.11.2019**
(21) Anmeldenummer: 17190443.6
(22) Anmeldetag: 11.09.2017
(51) Int. Cl.: A01D 44/00

(54) **VORRICHTUNG UND VERFAHREN ZUM ERFASSEN UND/ODER HERAUSZIEHEN VON AM GEWÄSSERGRUND WURZELNDEN WASSERPFLANZEN**
DEVICE AND METHOD FOR DETECTING AND/OR REMOVING AQUATIC PLANTS WITH ROOTS IN THE BOTTOM OF A BODY OF WATER
DISPOSITIF ET PROCÉDÉ DE PRÉHENSION ET/OU D'EXTRACTION DE PLANTES AQUATIQUES ENRACINÉES DANS LE FOND DE L'EAU

(30) Priorität: 19.09.2016 DE 102016011236
(43) Veröffentlichungstag der Anmeldung: 21.03.2018
(73) Patentinhaber: Lutat, Jörn, 40822 Mettmann (DE)
(72) Erfinder: Lutat, Jörn, 40822 Mettmann (DE)
(74) Vertreter: Benninger, Johannes

(56) Entgegenhaltungen:
- EP-A1- 2 266 384
- WO-A1-99/01021
- BE-A- 333 908
- GB-A- 2 237 490
- US-B1- 7 036 295

## Beschreibung

Die vorliegende Erfindung betrifft eine Vorrichtung zum Erfassen und/oder Herausziehen von am Gewässergrund wurzelnden Wasserpflanzen gemäß den Merkmalen des unabhängigen Anspruchs 1. Zudem betrifft die vorliegende Erfindung ein Verfahren zum Erfassen und/oder Herausziehen von am Gewässergrund wurzelnden Wasserpflanzen gemäß den Merkmalen des unabhängigen Verfahrensanspruchs 9.

Sowohl stehende Gewässer als auch Fließgewässer können mehr oder weniger umfangreichen und oftmals störenden Bewuchs mit Wasserpflanzen aufweisen. Während ein solcher Bewuchs bei schneller fließenden Gewässern normalerweise kein Problem darstellt, da die Vegetation meist in eine Gleichgewichtssituation gerät, können umfangreiche und sich ständig vermehrende und ausdehnende Wasserpflanzenkolonien in stehenden Gewässern wie Teichen oder Seen schnell zum Problem werden.

Hinzu kommt, dass immer häufiger eingeschleppte, sogenannte invasive Pflanzenarten Probleme durch unkontrollierte Vermehrung bereiten. Gerade im Bereich der Wasserpflanzen führt dies zur Verdrängung der heimischen Arten und zu einer unkontrollierten Vermehrung. Es entsteht in kurzer Zeit eine enorme Biomasse, die dann im Winter bei geringen Temperaturen und weniger Sauerstoff zum Umkippen des ganzen Gewässers führen kann. Zusätzlich wird die Nutzung für den Freizeitbereich durch Wassersport stark eingeschränkt.

Bislang wird für die Bekämpfung der unerwünschten Wasserpflanzen fast ausschließlich auf das Verfahren des Mähens des Pflanzenbewuchses gesetzt, wobei normalerweise speziell hierfür ausgerüstete Mähboote eingesetzt werden. Die Mahd von Wasserpflanzen ist allerdings dazu geeignet, manche der angesprochenen Probleme sogar noch zu verschärfen. Zudem treiben manche der abgemähten Pflanzenteile offen im Wasser und können sich wie Stecklinge nun noch besser vermehren.

Angesichts der mit der Mahd von Wasserpflanzen mittels speziell hierfür ausgerüsteten Mähbooten verbundenen Nachteile kann es als vorrangiges Ziel der vorliegenden Erfindung angesehen werden, eine Vorrichtung und ein Verfahren bereitzustellen, die zumindest einige dieser Nachteile vermeiden, insbesondere den Nachteil der mit der Mahd nicht wirksam zu kontrollierenden Vermehrung und Ausdehnung eines unerwünschten Wasserpflanzenbestandes. Außerdem soll eine vergleichsweise kostengünstige und dennoch effektive Möglichkeit der Entfernung von unerwünschten Beständen an Wasserpflanzen zur Verfügung gestellt werden.

Diese Ziele der Erfindung werden mit den Gegenständen der unabhängigen Ansprüche erreicht. Merkmale vorteilhafter Weiterbildungen der Erfindung ergeben sich aus den jeweiligen abhängigen Ansprüchen.

Ein zentraler und wesentlicher Ansatz zur Erreichung der genannten Ziele der Erfindung liegt darin, anstelle des aus dem Stand der Technik bekannten Schneidens der Wasserpflanzen oberhalb ihrer Wurzeln das Verfahren des Pflückens und/oder Ausrupfens der gesamten Pflanzen an und mitsamt ihren Wurzeln anzuwenden, wodurch die Entfernung des Pflanzenbestandes nicht nur wesentlich nachhaltiger gelingen kann; auch können die Schnitt- bzw. Entfernungsintervalle gegenüber den herkömmlichen Schnittverfahren deutlich verlängert werden. Zudem wird mittels des weitgehend restlosen Entfernens der gesamten Pflanzen verhindert, dass aufgrund der am Seegrund verbleibenden Wurzeln die abgeschnittenen Pflanzen erneut austreiben können.

Zur Erreichung der oben genannten Ziele schlägt die Erfindung eine insbesondere schwimmfähige und/oder mit einem Boot gekoppelte oder darauf montierbare Vorrichtung zum Erfassen und/oder Herausziehen von am Gewässergrund wurzelnden Wasserpflanzen mit den Merkmalen des unabhängigen Anspruchs 1 vor. Diese erfindungsgemäße Vorrichtung umfasst eine schwenkbare und/oder höhenverstellbare und damit an unterschiedliche Pflanzenhöhen anpassbare Erfassungseinrichtung, die mindestens zwei um parallele Achsen und paarweise gegenläufig zueinander rotierende Walzen aufweist, wobei zumindest eine der Walzen angetrieben ist, so dass die Walzen in ihrer paarweise gegenläufigen Rotation ggf. in geringem Abstand zueinander, vorzugsweise jedoch formschlüssig und/oder reibschlüssig aneinander abwälzen. Auf diese Weise können zwischen den mindestens zwei paarweise gegenläufig rotierenden Walzen die erfassten und vom Gewässergrund herausgezogenen Wasserpflanzen hindurchbewegt und dabei nach oben und in Richtung zur Wasseroberfläche und/oder in Richtung einer den Walzen in Förderrichtung nachgeordneten Transporteinrichtung bewegt und/oder gefördert werden.

Dieser Transporteinrichtung ist in Förderrichtung der herausgezogenen Wasserpflanzen ein Aufnahmebehälter zur Aufnahme von mittels der Erfassungseinrichtung herausgezogenen und mittels der Transporteinrichtung heranbeförderten Wasserpflanzen nachgeordnet. Wahlweise können der Transporteinrichtung in Förderrichtung der herausgezogenen Wasserpflanzen auch mehrere Aufnahmebehälter nachgeordnet sein. Der wenigstens eine Transportbehälter wird während des kontinuierlichen Erntevorganges allmählich befüllt und dient als Pufferbehälter, der somit längere Pflück- und Erntevorgänge erlaubt. Durch das Herausziehen der kompletten Pflanzen vom Gewässergrund werden die Pflanzen jeweils in einem Stück mit Wurzel entfernt. Die einzelne Pflanze wird an der Oberfläche oder in mittlerer Höhe gefasst, aber jeweils bis zum Grund mitsamt ihren Wurzeln entfernt, ohne dass etwa durch Mähwerkzeuge der Gewässergrund zu stark aufgewühlt wird.

Bei einer Variante der erfindungsgemäßen Vorrichtung können die wenigstens zwei paarweise gegenläufig rotierenden Walzen jeweils eine oberflächliche Beschichtung und/oder Strukturierung zur Erhöhung eines gegenseitigen und/oder mit den erfassten Pflanzen herzustellenden Formschlusses und/oder zur Erhöhung eines zwischen den Walzen und/oder zwischen diesen und den erfassten Pflanzen wirksamen Reibungskoeffizienten aufweisen. So besteht die Vorrichtung zum Rupfen insbesondere aus zwei gegenläufigen Rollen oder Walzen, die beschichtet sein können mit einem Werkstoff mit hohem Reibungskoeffizienten und einer gleichzeitig guten Flexibilität wie z.B. Gummi. Durch die reibschlüssige Kraftübertragung der Rollen werden die Pflanzen gegriffen und ausgerissen. Die Bewegung der gegenläufigen Rollen oder Walzen ermöglicht einen kontinuierlichen Ernteprozess. Unabhängig von der Beschaffenheit der Pflanze kann diese jeweils gegriffen werden, und durch den indirekten Anpressdruck der Rollen können hohe Zugkräfte erreicht werden. Der hohe Reibungskoeffizient der Rollen erlaubt geringere Rollendurchmesser. Eine optionale Verzahnung der Reibbeläge ermöglicht eine zuverlässigere Entfernung der Pflanzen. Durch die Absenkbarkeit der Ernteeinheit können die Pflanzen entfernt werden, bevor sie die Oberfläche erreichen.

Eine optionale Ausführungsvariante der erfindungsgemäßen Vorrichtung sieht vor, dass die Walzen an ihren Oberflächen jeweils eine Strukturierung und/oder eine formschlüssig ineinander greifende Verzahnung aufweisen. Die Rollen oder Walzen können alternativ verzahnend gestaltet werden. Durch das Ineinandergreifen der Zähne wird neben dem Reibschluss auch gleichzeitig ein teilweiser Formschluss ermöglicht. Alternativ zu den oben genannten Reibrollen können die Rollen auch mit herausragenden Profilen wie z.B. Hakenzähnen bestückt werden. Diese greifen die Pflanze formschlüssig. Der variable Anpressdruck ermöglicht eine variable Zugkraft, welche zu einer Verringerung des Antriebsmoments führt. Bei der Verwendung von verzahnten Profilen können auch Pflanzenarten gegriffen werden, welche sich mit einer Reibrolle aufgrund ihrer Struktur nicht greifen lassen.

Gemäß einer alternativen Variante der Vorrichtung können die Walzen an ihren Oberflächen jeweils eine Beschichtung aus elastischem Material aufweisen, das Gummi, Naturkautschuk, einen elastomeren Kunststoff enthält oder daraus besteht.

Außerdem ist bei der erfindungsgemäßen Vorrichtung vorzugsweise vorgesehen, dass die vorzugsweise höhenverstellbare Erfassungseinrichtung, die damit verbundene Transporteinrichtung sowie der lösbar damit verbundene Aufnahmebehälter Bestandteile einer schwimmfähigen oder an einem schwimmfähigen Träger verankerbaren und über der Wasseroberfläche haltbaren Vorrichtung sind. Der als Pufferbehälter fungierende Transportbehälter kann zudem von der Ernteeinheit abkoppelbar ausgestaltet sein, so dass kontinuierliche Ernteprozesse dadurch ermöglicht werden, dass ein voller Transport- oder Pufferbehälter abgekoppelt und gegen eine zuvor entleerten Transport- oder Pufferbehälter ausgetauscht wird.

Wahlweise kann der als Pufferbehälter fungierende Transport- oder Aufnahmebehälter der erfindungsgemäßen Vorrichtung für die herausgezogenen und von der Transporteinrichtung heranbeförderten Wasserpflanzen als schwimmfähiger Netzkäfig ausgebildet ist. So kann der Transport- oder Pufferbehälter als im Wasser schwimmfähiger Netzkäfig ausgestaltet sein. Er besteht in diesem Fall bspw. aus einem Rahmen, der schwimmfähig ist. Zwischen dem Rahmen sind Netze gespannt, innerhalb derer sich die eingesammelten Pflanzen befinden. Optionale Spundwände (nicht zwingend erforderlich) oberhalb des Rahmens verhindern das Herausspülen von Pflanzenresten. Ebenfalls als Option zu verstehende Rollen im unteren Bereich ermöglichen das Herausziehen an Land. An Land befindet sich bspw. eine Kippvorrichtung (nicht zwingend, sondern optional) zur schnellen Entleerung des Behälters.

Außerdem kann bei der erfindungsgemäßen Vorrichtung vorgesehen sein, dass die höhenverstellbare Erfassungseinrichtung oberhalb der Wasseroberfläche betreibbar und/oder auf die Wasseroberfläche absenkbar und/oder unterhalb die Wasseroberfläche bringbar und damit an eine Höhe eines zu erfassenden Pflanzenwuchses anpassbar ist. So ist insbesondere der vordere Bereich mit der Pflück- oder Entnahmeeinheit - hier als Erfassungseinrichtung bezeichnet - absenkbar und dadurch an die Höhe des Pflanzenwuchses anpassbar.

Die wenigstens zwei Walzen sind erfindungsgemäß mittels verstellbaren Anpressdrucks aneinander gedrückt. Der Anpressdruck wird erfindungsgemäß über verstellbare Federn oder alternativ mittels Pneumatik- oder Hydraulikzylindern eingestellt. Außerdem ist der Anpressdruck erfindungsgemäß mittels Hebelmechanismus aufhebbar. So lässt sich mittels einer Hebelvorrichtung die Vorspannung im Störfall schnell Abkoppeln, und das verklemmte Erntegut kann problemlos entfernt werden; hierbei kann wahlweise gleichzeitig ein Abstand zwischen den beiden Walzen eingestellt werden.

Weiterhin kann bei der erfindungsgemäßen Vorrichtung zumindest einer der rotierenden Walzen ein Abstreifer zugeordnet sein, der die Walze bei ihrer Rotation von Pflanzenresten reinigt und/oder befreit, und der die Pflanzen im Bedarfsfall wieder von den Zähnen der rotierenden Walzen oder von zumindest einer der rotierenden Walzen entfernt.

Zur Erreichung der oben genannten Ziele schlägt die Erfindung neben der zuvor in verschiedenen Ausführungsvarianten beschriebenen Vorrichtung auch ein Verfahren zum Erfassen und/oder Herausziehen von am Gewässergrund wurzelnden Wasserpflanzen mittels einer schwenkbaren und/oder höhenverstellbaren Erfassungseinrichtung vor, die mindestens zwei um parallele Achsen und paarweise gegenläufig zueinander rotierende sowie form- und/oder reibschlüssig aneinander abwälzende Walzen aufweist, zwischen denen die erfassten und vom Gewässergrund herausgezogenen Wasserpflanzen hindurchbewegt und dabei nach oben und in Richtung zur Wasseroberfläche und/oder in Richtung einer den Walzen in Förderrichtung nachgeordneten Transporteinrichtung und von dort in Richtung zu einem der Transporteinrichtung nachgeordneten Aufnahmebehälter bewegt und/oder gefördert werden. Bei diesem Pflück- und Ernteverfahren wird wahlweise ein Transportband zum Transport und zur Befüllung des Pufferbehälters verwendet.

Gemäß einer sinnvollen Option des erfindungsgemäßen Verfahrens können die wenigstens zwei paarweise gegenläufig rotierenden Walzen jeweils eine oberflächliche Beschichtung und/oder Strukturierung zur Erhöhung eines gegenseitigen und/oder mit den erfassten Pflanzen herzustellenden Formschlusses und/oder zur Erhöhung eines zwischen den Walzen und/oder zwischen diesen und den erfassten Pflanzen wirksamen Reibungskoeffizienten aufweisen.

Weiterhin kann das Verfahren vorsehen, dass die höhenverstellbare Erfassungseinrichtung oberhalb der Wasseroberfläche betrieben und/oder auf die Wasseroberfläche abgesenkt und/oder unterhalb die Wasseroberfläche gebracht und damit an eine Höhe eines zu erfassenden Pflanzenwuchses angepasst werden kann. Somit kann der vordere Bereich mit der Entnahmeeinheit bedarfsweise angehoben oder abgesenkt und dadurch an die Höhe des Pflanzenwuchses angepasst werden.

Zudem ist bei dem Verfahren vorgesehen, dass die wenigstens zwei Walzen mittels verstellbaren Anpressdrucks aneinander gedrückt werden. Vorzugsweise ist der Anpressdruck einstellbar, bspw. über verstellbare Federn oder alternativ mittels Pneumatik- oder Hydraulikzylindern.

Außerdem sieht das Verfahren erfindungsgemäß vor, dass der verstellbare Anpressdruck der wenigstens zwei Walzen aneinander mittels eines auslösbaren Hebelmechanismus aufgehoben werden kann. So lässt sich bspw. mittels einer hierfür geeigneten Hebelvorrichtung die Vorspannung im Störfall schnell Abkoppeln, so dass das verklemmte Erntegut problemlos entfernt werden kann; die Hebelvorrichtung kann ggf. gleichzeitig dazu genutzt werden, einen Abstand zwischen den beiden Walzen einzustellen.

Die Walzen können insbesondere jeweils um parallele horizontale Achsen rotieren, was jedoch keineswegs zwingend für die Funktion der Vorrichtung oder die Wirksamkeit des Verfahrens ist. Die Erfassungseinrichtung kann neben ihrer Heb- und Senkbarkeit um ihre horizontale Schwenkachse ggf. auch in einer Weise schwenkbar und verdrehbar sein, dass die Walzen jeweils winkelig zu einer horizontalen Ebene ausgerichtet werden können, sofern dies für die bessere Erfassung der Wasserpflanzen im Einzelfall zweckmäßig sein sollte.

Es sei an dieser Stelle ausdrücklich erwähnt, dass alle Aspekte und Ausführungsvarianten, die im Zusammenhang mit der erfindungsgemäßen Vorrichtung zum Erfassen und/oder Herausziehen von am Gewässergrund wurzelnden Wasserpflanzen erläutert wurden, gleichermaßen Teilaspekte des erfindungsgemäßen Verfahrens zum Erfassen und/oder Herausziehen von am Gewässergrund wurzelnden Wasserpflanzen mittels einer schwenkbaren und/oder höhenverstellbaren Erfassungseinrichtung betreffen oder sein können. Wenn daher an einer Stelle bei der Beschreibung zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung zum erfindungsgemäßen Verfahren von bestimmten Aspekten und/oder Zusammenhängen und/oder Wirkungen die Rede ist, so gilt dies gleichermaßen für die erfindungsgemäße Vorrichtung zum Erfassen und/oder Herausziehen von am Gewässergrund wurzelnden Wasserpflanzen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsvariante einer erfindungsgemäßen Vorrichtung zum Erfassen und/oder Herausziehen von am Gewässergrund wurzelnden Wasserpflanzen.
Fig. 2A zeigt eine schematische Perspektivansicht einer Erfassungseinrichtung mit zwei gegensinnig rotierenden Walzen der Vorrichtung gemäß Fig. 1 sowie einer den Walzen nachgeordneten Transporteinrichtung zur Beförderung der herausgezogenen Wasserpflanzen zu einer nachgeordneten Transport- oder Aufnahmeeinrichtung.
Fig. 2B zeigt eine schematische Seitenansicht der Erfassungseinrichtung mit zwei gegensinnig rotierenden Walzen gemäß Fig. 2A.
Fig. 2C zeigt eine vergrößerte Seitenansicht eines Teils der Fig. 2B mit einem Hebelmechanismus zum bedarfsweisen Aufheben einer Anpresskraft der beiden Walzen gegeneinander.
Fig. 3A zeigt eine schematische Seitenansicht einer ersten Ausführungsvariante der beiden gegensinnig rotierenden Walzen der Erfassungseinrichtung gemäß Fig. 2 mit jeweils glatten Oberflächen.
Fig. 3B zeigt eine schematische Perspektivansicht einer zweiten Ausführungsvariante der beiden gegensinnig rotierenden Walzen der Erfassungseinrichtung gemäß Fig. 2 mit jeweils strukturierten Oberflächen mit Querverzahnungen.
Fig. 3C zeigt eine schematische Seitenansicht der beiden Walzen der zweiten Ausführungsvariante gemäß Fig. 3B.
Fig. 3D zeigt eine Detailansicht der miteinander kämmenden Walzen mit Querverzahnungen.
Fig. 3E zeigt eine schematische Perspektivansicht einer dritten Ausführungsvariante der beiden gegensinnig rotierenden Walzen der Erfassungseinrichtung gemäß Fig. 2 mit jeweils strukturierten Oberflächen mit Stacheln.
Fig. 3F zeigt eine schematische Seitenansicht der beiden Walzen der dritten Ausführungsvariante gemäß Fig. 3E.
Fig. 3G zeigt eine Detailansicht der miteinander kämmenden Walzen mit Stacheln.
Fig. 4A zeigt eine schematische Seitenansicht einer durch einen Pufferbehälter gebildeten Transporteinrichtung zur Aufbewahrung von herausgezogenen Wasserpflanzen.
Fig. 4B zeigt eine schematische Draufsicht auf die Transporteinrichtung gemäß Fig. 4A.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar. Es sei daher an dieser Stelle betont, dass die anhand der Figuren relativ konkret und gegenständlich beschriebenen Ausführungsbeispiele den in den Ansprüchen niedergelegten und im allgemeinen Teil der Beschreibung in den unterschiedlichsten Ausführungsvarianten definierten abstrakten Erfindungsgedanken in keiner Weise schmälern oder einschränken sollen.

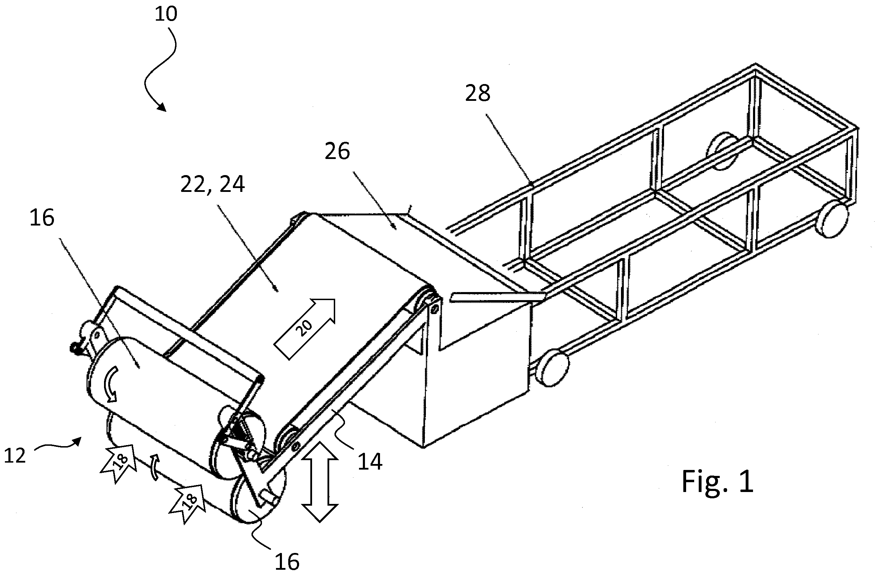

Die schematische Perspektivansicht der Fig. 1 zeigt eine Ausführungsvariante einer erfindungsgemäßen Vorrichtung 10 zum Erfassen und/oder Herausziehen von am Gewässergrund wurzelnden Wasserpflanzen (diese Wasserpflanzen sind hier nicht dargestellt). Die gezeigte Vorrichtung 10 kann insbesondere schwimmfähig und/oder mit einem Boot gekoppelt oder darauf montiert sein. Die anhand einer Ausführungsvariante gezeigte erfindungsgemäße Vorrichtung 10 umfasst an einer Frontseite eine in das Wasser eintauchende schwenkbare und/oder höhenverstellbare und damit an unterschiedliche Pflanzenhöhen anpassbare Erfassungseinrichtung 12 mit einem schwenkbaren Rahmen 14, an dessen Ende zwei um parallele Achsen und gegenläufig zueinander rotierende Walzen 16 drehbar gelagert sind. Die gegeneinander orientierten Drehrichtungen der beiden parallel angeordneten und rotierbar am Rahmen 14 gelagerten Walzen 16 sind jeweils durch gekrümmte Pfeile angedeutet, so dass sich eine Pflück- und Ziehrichtung 18 für zwischen die Walzen 16 geratende Wasserpflanzen gemäß der eingezeichneten Pfeilrichtung ergibt. Die von den gegenläufig rotierenden Walzen 16 erfassten und vom Gewässergrund herausgezogenen Wasserpflanzen werden zwischen den Walzen 16 hindurchbewegt und dabei nach oben und in Richtung zur Wasseroberfläche und/oder in Richtung einer den Walzen 16 in Förderrichtung 20 nachgeordneten Transporteinrichtung 22 bewegt und/oder gefördert.

Die Transporteinrichtung 22 ist im gezeigten Ausführungsbeispiel als endlos umlaufendes Förderband 24 gebildet, das im selben Rahmen 14 gelagert ist wie die beiden Walzen 16 und kann wahlweise über einen mit diesen gekoppelten Antrieb (hier nicht gezeigt) verfügen, bspw. in Gestalt eines elektromotorischen Antriebes, eines mechanischen, eines hydrostatischen oder eines anders gearteten Antriebes.

Dieser Transporteinrichtung 22 mit ihrem Förderband 24 ist in Förderrichtung 20 der herausgezogenen Wasserpflanzen ein Pufferbereich 26 und/oder ein Aufnahmebehälter 28 zur Aufnahme von mittels der Erfassungseinrichtung 12 herausgezogenen und mittels der Transporteinrichtung 22 heranbeförderten Wasserpflanzen nachgeordnet. Der Transport- oder Aufnahmebehälter 28 wird während des kontinuierlichen Erntevorganges allmählich befüllt und dient als Pufferbehälter, der somit längere Pflück- und Erntevorgänge erlaubt. Durch das Herausziehen der kompletten Pflanzen vom Gewässergrund werden die Pflanzen jeweils in einem Stück mit Wurzel entfernt. Die einzelne Pflanze wird mittels der Erfassungseinrichtung 12 an der Wasseroberfläche oder in mittlerer Höhe gefasst, aber jeweils bis zum Grund mitsamt ihren Wurzeln entfernt, ohne dass etwa durch Mähwerkzeuge der Gewässergrund zu stark aufgewühlt wird.

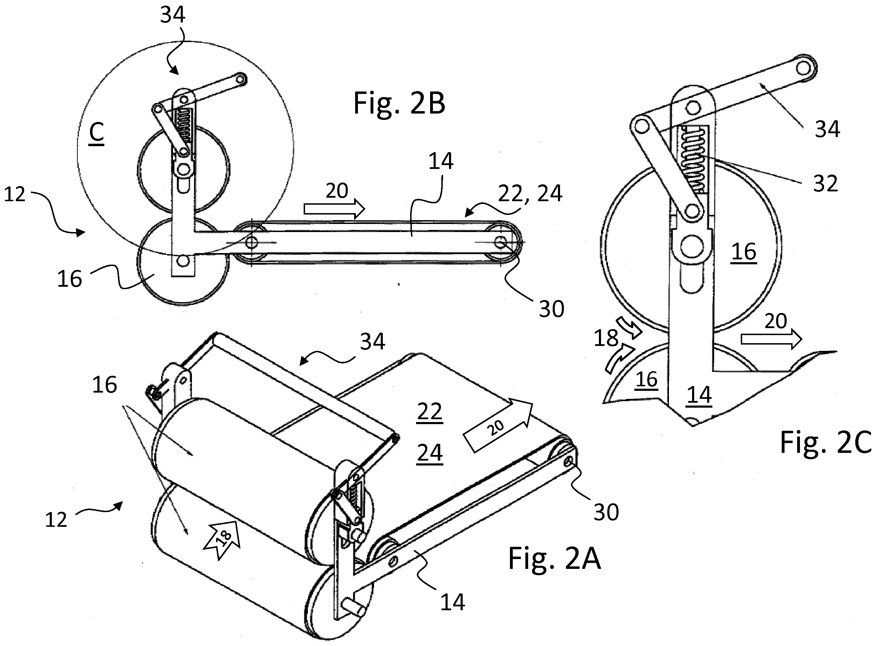

Die schematischen Ansichten der Figuren 2A, 2B und 2C verdeutlichen eine Ausführungsvariante der in Fig. 1 bereits verdeutlichten Erfassungseinrichtung 12, die je nach Bedarf um eine horizontale Schwenkachse 30 nach oben oder unten (siehe Doppelpfeil in der schematischen Seitenansicht der Fig. 2B) geschwenkt werden kann, um damit die Walzen 16 in geeigneter Höhe unterhalb der Wasseroberfläche oder im Bereich der Wasseroberfläche positionieren zu können. Wie es die Figuren 2A, 2B und 2C verdeutlichen, umfasst die Vorrichtung 10 zum Rupfen (Fig. 1) die beiden gegenläufig rotierenden Walzen 16, die insbesondere mit einem Werkstoff mit hohem Reibungskoeffizienten und einer gleichzeitig guten Flexibilität wie z.B. Gummi beschichtet sein können. Durch die reibschlüssige Kraftübertragung der Walzen 16 werden die Pflanzen gegriffen und ausgerissen. Die Bewegung der gegenläufigen Rollen oder Walzen 16 ermöglicht einen kontinuierlichen Ernteprozess. Unabhängig von der Beschaffenheit der Pflanzen können diese jeweils gegriffen werden, und durch den indirekten Anpressdruck der Rollen 16 können hohe Zugkräfte erreicht werden.

Der hohe Reibungskoeffizient der Rollen oder Walzen 16 erlaubt relativ geringere Rollendurchmesser. Wahlweise können die Walzen 16 an ihren Oberflächen 36 jeweils eine Beschichtung aus elastischem Material aufweisen, das Gummi, Naturkautschuk, einen elastomeren Kunststoff enthält oder daraus besteht.

Wie bereits erwähnt, sind die zwei gegenläufig rotierenden Walzen 16 mit einem verstellbaren Anpressdruck aneinander gedrückt. Hierbei kann es sinnvoll sein, den Anpressdruck einstellbar zu machen, bspw. über verstellbare Federn 32 oder alternativ mittels Pneumatik- oder Hydraulikzylindern. Wie es die Figuren 2A, 2B und 2C verdeutlichen, kann bei Bedarf der fest vorgegebene oder verstellbare Anpressdruck der wenigstens zwei Walzen 16 aneinander mittels eines auslösbaren Hebelmechanismus 34 aufgehoben werden. So lässt sich mittels einer Hebelvorrichtung 34 die von den Federn 32 ausgeübte Vorspannung im Störfall schnell Abkoppeln, und das verklemmte Erntegut kann problemlos zwischen den Walzen 16 entfernt werden; hierbei kann wahlweise gleichzeitig ein Abstand zwischen den beiden Walzen 16 eingestellt werden, wie dies insbesondere die schematische Seitenansicht der Fig. 2B oder deren Detailausschnitt (Fig. 2C) erkennen lässt.

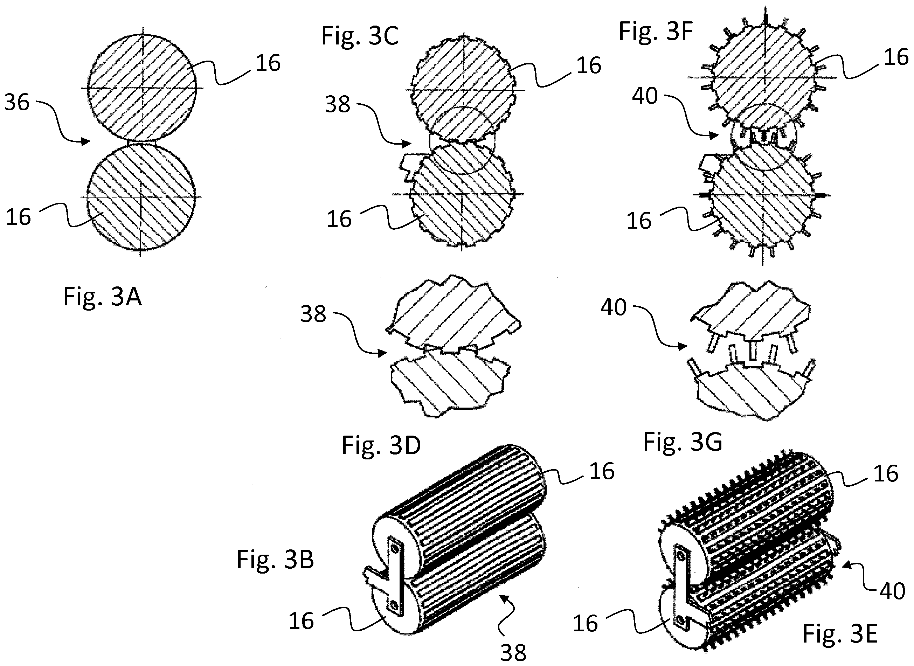

Wahlweise können die Walzen 16 jeweils die erwähnte Beschichtung aus elastischem Material aufweisen, so dass sie jeweils weitgehend glatte Oberflächen 36 aufweisen, die gegeneinander gedrückt werden und auf diese Weise eine reibschlüssige Erfassung der Wasserpflanzen ermöglichen. Diese Variante ist in der schematischen Seitenansicht der Fig. 3A gezeigt.

Eine anhand der Figuren 3B, 3C und 3D gezeigte optionale Querverzahnung 38 der beiden solchermaßen im Verzahnungseingriff stehenden und miteinander kämmenden Walzen 16 ermöglicht eine zuverlässigere Entfernung der Pflanzen. Gleiches kann für die anhand der Figuren 3E, 3F und 3G gezeigte optionale Ausstattung der Walzen 16 mit radial abstehenden Stacheln 40 oder Hakenzähnen gelten. Auch damit lassen sich die Wasserpflanzen besonders effektiv ergreifen und mit hohen Zugkräften mitsamt ihren Wurzeln vom Gewässergrund herausziehen.

Wie es die Figuren 1 bis 3 verdeutlichen, können die rotierenden Walzen 16 insbesondere jeweils um parallele horizontale Achsen orientiert sein, was jedoch keineswegs zwingend für die Funktion der Vorrichtung 10 ist. Die Erfassungseinrichtung 12 kann neben ihrer Heb- und Senkbarkeit um die horizontale Schwenkachse 30 ggf. auch in einer Weise schwenkbar und verdrehbar sein, dass die Walzen 16 jeweils winkelig zu einer horizontalen Ebene ausgerichtet werden können (hier nicht gezeigt), sofern dies für die bessere Erfassung der Wasserpflanzen im Einzelfall zweckmäßig sein sollte.

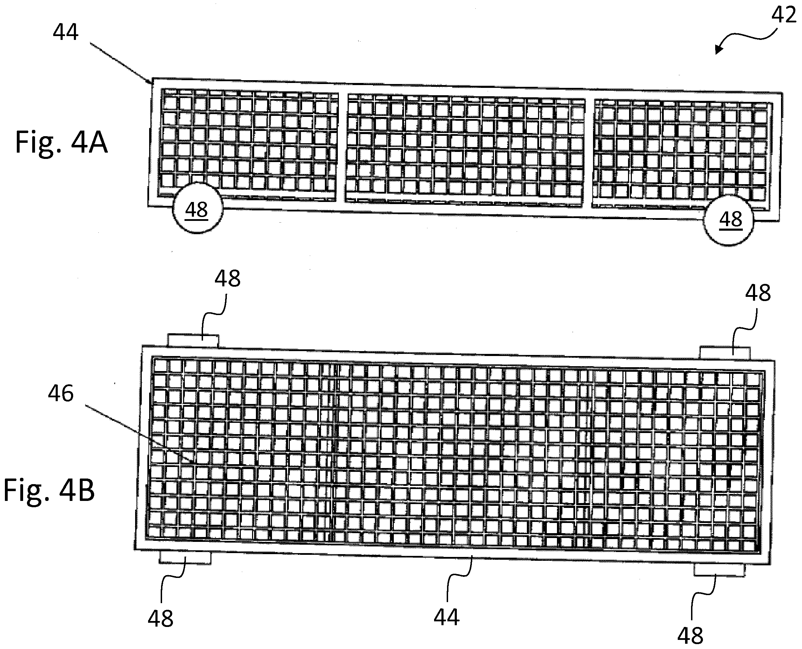

Wie es die schematische Seitenansicht der Fig. 4A und die schematische Draufsicht der Fig. 4B erkennen lassen, kann der als Pufferbehälter fungierende Transportbehälter 42 von der Ernteeinheit abkoppelbar ausgestaltet sein, so dass kontinuierliche Ernteprozesse dadurch ermöglicht werden, dass ein voller Transport- oder Pufferbehälter 42 abgekoppelt und gegen einen zuvor entleerten Transport- oder Pufferbehälter 42 ausgetauscht wird.

Der Transport- oder Pufferbehälter 42 ist im Wasser als Netzkäfig ausgestaltet. Er besteht aus einem Rahmen 44, der schwimmfähig ist. Zwischen dem Rahmen 44 sind Netze 46 gespannt, innerhalb derer sich die eingesammelten Pflanzen befinden. Optionale Spundwände oberhalb des Rahmens 44 (nicht gezeigt) verhindern das Herausspülen von Pflanzenresten. Rollen 48 im unteren Bereich des Rahmens 44 ermöglichen das Herausziehen des von der Vorrichtung 10 abgekoppelten oder noch mit dieser verbundenen Transportbehälters 42 an Land. An Land befindet sich ggf. eine hier nicht gezeigte Kippvorrichtung zur schnellen Entleerung des Behälters 42.

Außerdem ist bei der erfindungsgemäßen Vorrichtung 10 vorzugsweise vorgesehen, dass die vorzugsweise höhenverstellbare Erfassungseinrichtung 12, die damit verbundene Transporteinrichtung 22 sowie der lösbar damit verbundene Aufnahmebehälter 42 Bestandteile einer schwimmfähigen oder an einem schwimmfähigen Träger verankerbaren und über der Wasseroberfläche haltbaren Vorrichtung 10 sind.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Vorrichtung, Vorrichtung zum Erfassen und/oder Herausziehen von am Gewässergrund wurzelnden Wasserpflanzen
- 12: Erfassungseinrichtung
- 14: Rahmen, schwenkbarer Rahmen
- 16: Walzen, rotierende Walzen, Rollen
- 18: Pflück- und Ziehrichtung
- 20: Förderrichtung
- 22: Transporteinrichtung
- 24: Förderband, endlos umlaufendes Förderband
- 26: Pufferbereich
- 28: Aufnahmebehälter
- 30: Schwenkachse, horizontale Schwenkachse
- 32: Federn, Anpresseinrichtung
- 34: Hebelmechanismus
- 36: glatte Oberfläche
- 38: Querverzahnung
- 40: Stacheln, Hakenzähne
- 42: Aufnahmeeinrichtung, Aufnahmebehälter, Transportbehälter, Pufferbehälter
- 44: Rahmen
- 46: Netze
- 48: Rollen, Räder

## Patentansprüche

1. Vorrichtung (10) zum Erfassen und/oder Herausziehen von am Gewässergrund wurzelnden Wasserpflanzen, mit einer schwenkbaren und/oder höhenverstellbaren Erfassungseinrichtung (12), die mindestens zwei um parallele Achsen und paarweise gegenläufig zueinander rotierende Walzen (16) aufweist, wobei zumindest eine der Walzen (16) angetrieben ist, und wobei die Walzen (16) in ihrer paarweise gegenläufigen Rotation form- und/oder reibschlüssig aneinander abwälzen, zwischen welchen mindestens zwei paarweise gegenläufig rotierenden Walzen (16) die erfassten und vom Gewässergrund herausgezogenen Wasserpflanzen hindurchbewegt und dabei nach oben und in Richtung zur Wasseroberfläche und/oder in Richtung einer den Walzen (16) in Förderrichtung (20) nachgeordneten Transporteinrichtung (22) bewegt und/oder gefördert werden, welcher Transporteinrichtung (22) in Förderrichtung (20) ein Aufnahmebehälter (42) zur Aufnahme von mittels der Erfassungseinrichtung (12) herausgezogenen und mittels der Transporteinrichtung (22) heranbeförderten Wasserpflanzen nachgeordnet ist, **dadurch gekennzeichnet, dass** die wenigstens zwei Walzen (16) mittels verstellbarer Federn (32) und/oder mittels Pneumatik- oder Hydraulikzylindern mit verstellbarem Anpressdruck aneinander gedrückt sind, wobei der verstellbare Anpressdruck der wenigstens zwei Walzen (16) aneinander mittels eines auslösbaren Hebelmechanismus (34) aufhebbar ist.

2. Vorrichtung nach Anspruch 1, bei welcher die wenigstens zwei paarweise gegenläufig rotierenden Walzen (16) jeweils eine oberflächliche Beschichtung und/oder Strukturierung zur Erhöhung eines gegenseitigen und/oder mit den erfassten Pflanzen herzustellenden Formschlusses und/oder zur Erhöhung eines zwischen den Walzen (16) und/oder zwischen diesen und den erfassten Pflanzen wirksamen Reibungskoeffizienten aufweisen.

3. Vorrichtung nach Anspruch 2, bei der die Walzen (16) an ihren Oberflächen jeweils eine Strukturierung und/oder eine formschlüssig ineinander greifende Verzahnung (38) aufweisen.

4. Vorrichtung nach Anspruch 2, bei der die Walzen (16) an ihren Oberflächen jeweils eine Beschichtung aus elastischem Material aufweist, das Gummi, Naturkautschuk, einen elastomeren Kunststoff enthält oder daraus besteht.

5. Vorrichtung nach einem der Ansprüche 1 bis 4, bei der die höhenverstellbare Erfassungseinrichtung (12), die damit verbundene Transporteinrichtung (22) sowie der lösbar damit verbundene Aufnahmebehälter (42) Bestandteile einer schwimmfähigen oder an einem schwimmfähigen Träger verankerbaren und über der Wasseroberfläche haltbaren Vorrichtung (10) sind.

6. Vorrichtung nach Anspruch 5, bei welcher der Aufnahmebehälter (42) für die herausgezogenen und von der Transporteinrichtung (22) heranbeförderten Wasserpflanzen als schwimmfähiger Netzkäfig ausgebildet ist.

7. Vorrichtung nach Anspruch 5 oder 6, bei der die höhenverstellbare Erfassungseinrichtung (12) oberhalb der Wasseroberfläche betreibbar und/oder auf die Wasseroberfläche absenkbar und/oder unterhalb der Wasseroberfläche bringbar und damit an eine Höhe eines zu erfassenden Pflanzenwuchses anpassbar ist.

8. Vorrichtung nach einem der Ansprüche 1 bis 7, bei welcher zumindest einer der rotierenden Walzen (16) ein Abstreifer zugeordnet ist, der die Walze (16) bei ihrer Rotation von Pflanzenresten reinigt und/oder befreit.

9. Verfahren zum Erfassen und/oder Herausziehen von am Gewässergrund wurzelnden Wasserpflanzen mittels einer schwenkbaren und/oder höhenverstellbaren Erfassungseinrichtung (12), die mindestens zwei um parallele Achsen und paarweise gegenläufig zueinander rotierende sowie form- und/oder reibschlüssig aneinander abwälzende Walzen (16) aufweist, zwischen denen die erfassten und vom Gewässergrund herausgezogenen Wasserpflanzen hindurchbewegt und dabei nach oben und in Richtung zur Wasseroberfläche und/oder in Richtung einer den Walzen (16) in Förderrichtung (20) nachgeordneten Transporteinrichtung (22) und von dort in Richtung zu einem der Transporteinrichtung (22) nachgeordneten Aufnahmebehälter (42) bewegt und/oder gefördert werden,
**dadurch gekennzeichnet, dass** die wenigstens zwei Walzen (16) mittels verstellbaren Anpressdrucks aneinander gedrückt werden, wobei der verstellbare Anpressdruck der wenigstens zwei Walzen (16) aneinander mittels eines auslösbaren Hebelmechanismus (34) aufgehoben werden kann.

10. Verfahren nach Anspruch 9, bei dem die wenigstens zwei paarweise gegenläufig rotierenden Walzen (16) jeweils eine oberflächliche Beschichtung und/oder Strukturierung zur Erhöhung eines gegenseitigen und/oder mit den erfassten Pflanzen herzustellenden Formschlusses und/oder zur Erhöhung eines zwischen den Walzen (16) und/oder zwischen diesen und den erfassten Pflanzen wirksamen Reibungskoeffizienten aufweisen.

11. Verfahren nach Anspruch 9 oder 10, bei dem die höhenverstellbare Erfassungseinrichtung (12) oberhalb der Wasseroberfläche betrieben und/oder auf die Wasseroberfläche abgesenkt und/oder unterhalb die Wasseroberfläche gebracht und damit an eine Höhe eines zu erfassenden Pflanzenwuchses angepasst werden kann.

## Claims

1. An apparatus (10) for seizing and/or extracting aquatic plants rooting in the bed of a water body, with a swivelable and/or height-adjustable seizing device (12), which has at least two rollers (16) rotating about parallel axles and pairwise in opposite directions to each other, wherein at least one of the rollers (16) is powered, and wherein the rollers (16) in their pairwise rotation in opposite directions roll off on each other in a form- and/or friction-fitting manner, between which at least two rollers (16) rotating pairwise in opposite directions the aquatic plants that have been seized and extracted from the bed of the water body are passed through and in the process are moved and/or conveyed upward toward the water surface and/or toward a transport device (22) that is disposed in conveying direction (20) downstream from the rollers (16), downstream in conveying direction (20) from which transport device (22) a receptacle (42) is disposed for receiving aquatic plants that have been extracted by means of the seizing device (12) and conveyed thereto by means of the transport device (22), **characterised in that** the at least two rollers (16) are pressed against each other with adjustable contact pressure by means of adjustable springs (32) and/or by means of pneumatic or hydraulic cylinders, wherein the adjustable contact pressure of the at least two rollers (16) against each other is cancellable by means of a releasable lever mechanism (34).

2. The apparatus according to claim 1, in which the at least two rollers (16) rotating pairwise in opposite directions each have a surface coating and/or surface structure for increasing a form fit to be produced with each other and/or with the seized plants and/or for increasing a coefficient of friction effective between the rollers (16) and/or between said rollers (16) and the seized plants.

3. The apparatus according to claim 2, in which the rollers (16) each have a structure and/or form-fitting interlocking gear teeth (38) on their surfaces.

4. The apparatus according to claim 2, in which the rollers (16) each have a coating of elastic material on their surfaces, the material containing or made of vulcanised or raw natural rubber or an elastomeric synthetic.

5. The apparatus according to one of the claims 1 to 4, in which the height-adjustable seizing device (12), the therewith connected transport device (22), as well as the receptacle (42) detachably connected thereto, are components of a buoyant apparatus (10) or of an apparatus (10) that is anchorable to a buoyant support and holdable above the water surface.

6. The apparatus according to claim 5, in which the receptacle (42) for the aquatic plants that have been extracted and conveyed thereto by the transport device (22) is designed as buoyant net cage.

7. The apparatus according to claim 5 or 6, in which the height-adjustable seizing device (12) is operable above the water surface and/or is lowerable onto the water surface and/or is bringable below the water surface and is thus adaptable to a height of a growth of plants to be seized.

8. The apparatus according to one of the claims 1 to 7, in which at least one of the rotating rollers (16) has a wiper assigned to it, which wiper cleans and/or frees the roller during its rotation from plant remains.

9. A method for seizing and/or extracting aquatic plants rooting in the bed of a water body by means of a swivelable and/or height-adjustable seizing device (12), which has at least two rollers (16) rotating about parallel axles and pairwise in opposite directions as well as rolling off on each other in a form- and/or friction-fitting manner, between which rollers (16) the aquatic plants that have been seized and extracted from the bed of the water body are passed through and in the process are moved and/or conveyed upward toward the water surface and/or toward a transport device (22) that is disposed in conveying direction (20) downstream from the rollers (16), and from there toward a receptacle (42) that is disposed downstream from the transport device (22), **characterised in that** the at least two rollers (16) are pressed against each other by means of adjustable contact pressure, wherein the adjustable contact pressure of the at least two rollers (16) against each other can be cancelled by means of a releasable lever mechanism (34).

10. The method according to claim 9, in which the at least two rollers (16) rotating pairwise in opposite directions each have a surface coating and/or surface structure for increasing a form fit to be produced with each other and/or with the seized plants and/or for increasing a coefficient of friction effective between the rollers (16) and/or between said rollers (16) and the seized plants.

11. The method according to claim 9 or 10, in which the height-adjustable seizing device (12) can be operated above the water surface and/or can be lowered onto the water surface and/or can be brought below the water surface and can thus be adapted to a height of a growth of plants to be seized.

## Revendications

1. Dispositif (10) de préhension et/ou d'extraction de plantes aquatiques enracinées dans le fond de l'eau, doté d'un moyen de préhension (12) pivotant et/ou ajustable en hauteur qui présente au moins deux rouleaux (16) tournant autour d'axes parallèles et deux par deux en sens inverse l'un de l'autre, au moins un des rouleaux (16) étant entraîné et lesdits rouleaux (16) roulant, dans leur rotation deux par deux en sens inverse, à partir l'un de l'autre mécaniquement et/ou par friction, les plantes aquatiques saisies et extraites du fond de l'eau passant entre lesdits au moins deux rouleaux (16) tournant deux par deux en sens inverse, et étant à cet égard déplacées et/ou convoyées vers le haut et en direction de la surface de l'eau et/ou dans le sens d'un moyen de transport (22) placé, dans le sens du convoyage (20), en aval des rouleaux (16), un réceptacle (42) destiné à recueillir les plantes aquatiques extraites à l'aide du moyen de préhension (12) et rapprochées à l'aide du moyen de transport (22), étant placé, dans le sens du convoyage (20), en aval dudit moyen de transport (22), **caractérisé en ce que** lesdits au moins deux rouleaux (16) sont pressés l'un contre l'autre à une pression de contact ajustable, à l'aide de ressorts (32) ajustables et/ou à l'aide de vérins pneumatiques ou hydrauliques, ladite tension de contact ajustable desdits au moins deux rouleaux (16) l'un contre l'autre pouvant être annulée à l'aide d'un mécanisme à levier (34) susceptible d'être déclenché.

2. Dispositif selon la revendication 1, dans lequel lesdits au moins deux rouleaux (16) tournant deux par deux en sens inverse présentent chacun un revêtement ou une structuration en surface pour augmenter une liaison mécanique réciproque et/ou à établir avec les plantes saisies, et/ou pour augmenter un coefficient de friction actif entre les rouleaux (16) et/ou entre ceux-ci et les plantes saisies.

3. Dispositif selon la revendication 2, dans lequel les rouleaux (16) présentent chacun sur leur surface respective une structuration et/ou un engrenage (38) s'agrippant mécaniquement l'un dans l'autre.

4. Dispositif selon la revendication 2, dans lequel les rouleaux (16) présentent chacun sur leur surface respective un revêtement en matériau élastique qui contient de la gomme, du caoutchouc naturel, une matière plastique élastomère ou en est constitué.

5. Dispositif selon l'une quelconque des revendications 1 à 4, dans lequel le moyen de préhension (12) ajustable en hauteur, le moyen de transport (22) qui y est relié ainsi que le réceptacle (42) qui y est relié de manière détachable sont des composantes d'un dispositif (10) flottant ou susceptible d'être rattaché à un support flottant et d'être maintenu au-dessus de la surface de l'eau.

6. Dispositif selon la revendication 5, dans lequel le réceptacle (42) pour les plantes aquatiques extraites et rapprochées par le moyen de transport (22) est réalisé sous la forme d'une cage grillagée flottante.

7. Dispositif selon la revendication 5 ou 6, dans lequel le moyen de préhension (12) ajustable en hauteur est susceptible de fonctionner au-dessus de la surface de l'eau et/ou d'être abaissé à la surface de l'eau et/ou d'être amené en dessous de la surface de l'eau et est ainsi susceptible d'être adapté à une hauteur d'une végétation à saisir.

8. Dispositif selon l'une quelconque des revendications 1 à 7, dans lequel est associé à au moins un des rouleaux (16) en rotation un racloir qui nettoie et/ou libère le rouleau (16) de restes de plantes au cours de sa rotation.

9. Procédé de préhension et/ou d'extraction de plantes aquatiques enracinées dans le fond de l'eau à l'aide d'un moyen de préhension (12) pivotant et/ou ajustable en hauteur qui présente au moins deux rouleaux (16) tournant autour d'axes parallèles et deux par deux en sens inverse l'un de l'autre ainsi que mécaniquement et/ou par friction à partir l'un de l'autre, entre lesquels on fait passer les plantes aquatiques saisies et extraites du fond de l'eau tout en les déplaçant et/ou les convoyant vers le haut et en direction de la surface de l'eau et/ou dans le sens d'un moyen de transport (22) placé, dans le sens de convoyage (20), en aval des rouleaux (16), et à partir de là, en direction d'un réceptacle (42) placé en aval du moyen de transport (22), **caractérisé en ce que** lesdits au moins deux rouleaux (16) sont pressés l'un à l'autre à une pression de contact ajustable, ladite pression de contact ajustable desdits au moins deux rouleaux (16) pouvant être annulée au moyen d'un mécanisme à levier (34) susceptible d'être déclenché.

10. Procédé selon la revendication 9, dans lequel lesdits au moins deux rouleaux (16) tournant deux par deux en sens inverse présentent chacun un revêtement ou une structuration en surface pour augmenter une liaison mécanique réciproque et/ou à établir avec les plantes saisies, et/ou pour augmenter un coefficient de friction actif entre les rouleaux (16) et/ou entre ceux-ci et les plantes saisies.

11. Procédé selon la revendication 9 ou 10, dans lequel le moyen de préhension (12) ajustable en hauteur peut fonctionner au-dessus de la surface de l'eau et/ou être abaissé à la surface de l'eau et/ou être amené en dessous de la surface de l'eau et peut ainsi être adapté à une hauteur d'une végétation à saisir.
